(19) Europäisches Patentamt
European Patent Office
Office européen des brevets

(11) Numéro de publication: **0 408 474 A1**

# (12) DEMANDE DE BREVET EUROPEEN

(21) Numéro de dépôt: 90420324.7

(51) Int. Cl.5: **C08L 77/00**

(22) Date de dépôt: 09.07.90

(30) Priorité: 11.07.89 FR 8909670

(43) Date de publication de la demande:
16.01.91 Bulletin 91/03

(84) Etats contractants désignés:
AT BE CH DE DK ES FR GB GR IT LI LU NL SE

(71) Demandeur: RHONE-POULENC CHIMIE
25, quai Paul Doumer
F-92408 Courbevoie Cédex(FR)

(72) Inventeur: Prevost, Jean-Pierre
53, Place Grandclément
F-69100 Villeurbannne(FR)
Inventeur: Roberjot, Daniel
4, rue Louis & Auguste Lumièreère
F-69320 Feyzin(FR)

(74) Mandataire: Rioufrays, Roger et al
RHONE-POULENC CHIMIE Service Brevets
Chimie Centre de Recherches des Carrières
B.P. 62
F-69192 Saint-Fons Cédex(FR)

## (54) Mélange amorphe comprenant d'une part un polyamide semi-aromatique amorphe dérivant au moins d'alkylpentaméthylènediamine et d'acide(s) dicarboxylique(s) aromatique(s) et d'autre part un polyamide semi-cristallin de type nylon dérivant d'hexaméthylènediamine, d'acide adipique et/ou d'epsilon-caprolactame et leur procédé de préparation.

(57) La présente invention concerne des mélanges polymères monophasiques et amorphes, utilisables notamment pour réaliser des articles conformés par moulages.

Selon l'invention, lesdits mélanges comprennent (i) un polyamide semi-aromatique amorphe obtenu à partir de méthyl-2 pentaméthylènediamine-1,5, prise seule ou en mélange avec de l'éthyl-2 tétraméthylènediamine-1,4, et d'acide isophtalique, pris seul ou en mélange avec de l'acide téréphtalique, et (2i) un polyamide semi-cristallin de type nylon choisi dans le groupe formé par le nylon 6,6, le nylon 6, les mélanges de ces polymères et les copolymères obtenus à partir des monomères conduisant à ces nylons, la quantité du polyamide semi-cristallin de type nylon (2i) représentant au plus 40 % du poids de l'ensemble polyamide semi-aromatique (i) + polyamide semi-cristallin (2i).

Avec de pareils mélanges, on peut améliorer les propriétés de résilience, à des températures allant de la température ambiante à -25° C, du polyamide semi-aromatique.

EP 0 408 474 A1

# MELANGE AMORPHE COMPRENANT D'UNE PART UN POLYAMIDE SEMI-AROMATIQUE AMORPHE DERIVANT AU MOINS D'ALKYLPENTAMETHYLENEDIAMINE ET D'ACIDE(S) DICARBOXYLIQUE(S) AROMATIQUE(S) ET D'AUTRE PART UN POLYAMIDE SEMI-CRISTALLIN DE TYPE NYLON DERIVANT D'HEX METHYLENEDIAMINE, D'ACIDE ADIPIQUE ET/OU D'ε-CAPROLACTAME ET LEUR PROCEDE DE PREPARATION

La présente invention concerne des mélanges polymères monophasiques et amorphes, utilisables notamment pour réaliser des articles conformés par moulage, comprenant d'une part une quantité majoritaire d'un polyamide semi-aromatique amorphe dérivant au moins d'une alkylpentaméthylènediamine et d'acide(s) dicarboxyliques) aromatique(s) et d'autre part une quantité minoritaire d'un polyamide semi-cristallin de type nylon dérivant d'hexaméthylènediamine, d'acide adipique et/ou d'ε-caprolactame. La présente invention concerne également un procédé de préparation de ces mélanges.

Les polyamides linéaires totalement aliphatiques de type nylon, de poids moléculaire élevé, possèdent de nombreuses propriétés physiques et chimiques les rendant aptes à la production d'une grande variété de pièces conformées telles que fibres, films et autres objets moulés. Le polyhexaméthylèneadipamide ou nylon 6,6 est un exemple de polyamide ayant un développement très important. Ces polymères montrent cependant un certain nombre de défauts dont l'importance est fonction de l'utilisation envisagée. Dans la majorité des cas, ces polyamides sont des polymères semi-cristallins, donc ils ne sont pas transparents, et ils ne peuvent pas être utilisés dans les domaines d'application qui exigent une transparence ; par ailleurs, ces polyamides présentent généralement un retrait au moulage qui peut être non négligeable, une reprise d'eau qui peut être importante et controllairement une stabilité dimensionnelle à l'humidité qui peut être insuffisante et des propriétés mécaniques affectées par l'humidité ambiante qui chutent, de plus, à des températures supérieures à 100 °C, en raison de la valeur insuffisamment élevée de leur température de transition vitreuse Tg (elle est généralement inférieure à 80 °C).

De très nombreux brevets décrivent des polyamides ayant des groupements différents tels que notamment les polyamides à motifs mixtes aliphatiques et aromatiques, qui permettent de remédier en partie ou en totalité aux défauts dont on a parlé ci-avant. L'introduction de cycles aromatiques entraîne une remontée du point de fusion ou de ramollissement et de la Tg avec comme conséquence notamment une meilleure conservation des propriétés mécaniques à hautes températures. De plus, en adaptant leur composition, ces polyamides peuvent être des polymères amorphes. Des polyamides semi-aromatiques amorphes typiques sont par exemple : les copolymères obtenus à partir d'hexaméthylènediamine et des acides isophtalique (60 à 90% en mole dans le mélange des diacides) et téréphtalique (cf. US-A-3.382,216), qui présentent une Tg de l'ordre de 100 °C à 120 °C, et les copolymères obtenus à partir de méthyl-2 pentaméthylènediamine et des acides isphtalique (15 à 30 % en mole dans le mélange des diacides) et téréphtalique (cf. FR-A-2.325.673), qui présentent une Tg de l'ordre de 137 °C à 142 °C. Toutefois, ces polyamides semi-aromatiques amorphes, en raison de viscosités à l'état fondu élevées, demandent pour leur transformation par voie fondue, par exemple par injection, une température de mise en oeuvre élevée qui est de nature à freiner leur développement : cette température est par exemple de l'ordre de 280 °C à 300 °C dans le cas des copolymères précités obtenus à partir d'hexaméthylènediamine et d'acides aromatiques, et de 290 °C à 310 °C dans le cas des copolymères précités obtenus à partir de méthyl-2 pentaméthylènediamine et d'acides aromatiques. Par ailleurs, les polyamides semi-aromatiques présentent un très faible retrait qui rend souvent difficile les opérations de démoulage des articles conformés préparés à l'aide de ces matériaux.

Poursuivant des travaux dans le domaine des polyamides semi-aromatiques et souhaitant pouvoir disposer de matières polyamide présentant au moins l'ensemble des propriétés suivantes :

- être utilisables dans les domaines d'application qui exigent une excellente transparence,
- posséder une Tg supérieure à 100 °C de manière à pouvoir conduire, par exemple par injection, à des articles conformés capables de présenter une meilleure stabilité du polymère et une meilleure conservation des propriétés mécaniques aux températures élevées par rapport à ce qui se passe lorsque l'on part d'un polyamide de type nylon,
- pourvoir être transformés aisément par voie fondue à une température de mise en oeuvre pas trop élevée du type ce celles allant de 270 °C à 290 °C, en raison d'une viscosité à l'état fondu inférieure à celle d'un polyamide semi-aromatique,
- offrir le cas échéant un léger retrait au moulage, dont le degré est supérieur à celui obtenu dans le cas du polyamide semi-aromatique mais inférieur à celui obtenu dans le cas d'un polyamide de type nylon, de façon à favoriser le démoulage des articles conformés préparés,

la Demanderesse a mis au point, et c'est ce qui constitue l'objet de la présente invention, des mélanges

monophasiques et amorphes comprenant un polyamide semi-aromatique amorphe de nature particulière et un polyamide semi-cristallin approprié de type nylon, dans lesquels la quantité du polyamide de type nylon (dans le mélange des deux types de polyamides) est minoritaire, afin de conserver le caractère amorphe aux mélanges.

En faisant cette invention, la Demanderesse a constaté que des polyamides semi-aromatiques amorphes particuliers peuvent être associés à des polyamides semi-cristallins appropriés de type nylon (utilisés en quantité minoritaire dans l'association des deux types de polyamides) pour conduire à des mélanges permettant d'obtenir :

- outre la satisfaction de l'objectif précité englobant notamment les exigences en matières de transparence, de valeurs de Tg et de conditions de transformation dont on a parlé ci-avant,
- la possibilité d'avoir des propriétés de résilience qui d'une part sont supérieures à celles obtenues avec le polyamide semi-aromatique utilisé seul pour des températures d'analyses allant de la température ambiante (23°) à des températures aussi basses que celles allant par exemple de 0°C à -25°C et d'autre part restent sensiblement constantes dans tout cet intervalle de températures allant de la température ambiante à par exemple -25°C.

La réalisation de mélanges comprenant un polyamide semi-aromatique amorphe et un polyamide semi-cristallin de type nylon a déjà été proposée dans l'état antérieur de la technique. En particulier, on décrit dans l'EP-A-70001 des mélanges comprenant 2 % à 95 % en poids d'un polyamide semi-aromatique amorphe obtenu à partir d'hexaméthylènediamine, d'une diamine cyclique comme le bis(p-aminocyclohexyl)méthane et d'acides isophtalique et téréphtalique et 98 % à 5 % en poids d'un polyamide semi-cristallin de type nylon. Cet art antérieur enseigne notamment que l'emploi de quantités minoritaires de polyamide de type nylon (5 % à 40 % en poids dans le mélange des deux types de polyamides) est une manière d'améliorer la résistance aux solvants des polyamides semi-aromatiques amorphes, mais il n'y a rien dans cet art antérieur qui permette de prévoir notamment le comportement particulier en matière de résilience que peuvent présenter les mélanges de la Demanderesse dans lesquels le polyamide semi-aromatique amorphe répond à une autre structure chimique.

Plus précisément, la présente invention concerne des mélanges monophasiques et amorphes comprenant un polyamide semi-aromatique amorphe et un polyamide semi-cristallin de type nylon dans lesquels la quantité du polyamide semi-cristallin de type nylon dans le mélange des deux types de polyamide est minoritaire, lesdits mélanges étant caractérisés en ce que : (i) le polyamide semi-aromatique amorphe de départ, qui peut être un homo-ou un copolymère, présente les particularités suivantes :

. il comprend dans sa structure des unités de récurrence de formules (I), (II), (III) et (IV) :

**(I) désignant la structure :** $- HN - CH_2 - \underset{}{\overset{CH_3}{\overset{|}{CH}}} - CH_2 - CH_2 - CH_2 - NH -$,

**(II) désignant la structure :** $- HN - CH_2 - \overset{C_2H_5}{\overset{|}{CH}} - CH_2 - CH_2 - NH -$,

**(III) désignant la structure :** 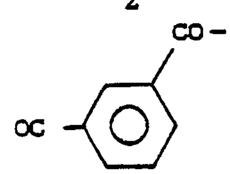

**(IV) désignant la structure :** 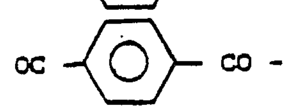 ,

les unités de formules (II) et (IV) étant facultatives ;

. le rapport molaire des unités (I) + éventuellement (II) par rapport à la somme des unités (III) + éventuellement (IV) est égal à 1;

. la quantité des unités (II) dans le mélange (I) + (II) se situe dans l'intervalle allant de 0 % à 15 % en mole et celle des unités (I), par rapport à la même référence, se situe dans l'intervalle allant de 100 % à 85 % en mole ;

. la quantité des unités (IV) dans le mélange (III) + (IV) se situe dans l'intervalle allant de 0 % à 90 % en mole et celle des unités (III), par rapport à la même référence, se situe dans l'intervalle allant de 100 % à

10 % en mole ;

(2i) le polyamide semi-cristallin de type nylon, qui peut être un homo- ou un copolymère, est pris dans le groupe formé par : le nylon 6,6 (polymère d'hexaméthylènediamine et d'acide adipique), le nylon 6 (polymère d'$\epsilon$-caprolactame), les mélanges de ces polymères et les copolymères obtenus à partir des monomères cités ci-avant servant à la préparation des nylon 6,6 et 6 ; et

(3i) la quantité du polyamide semi-cristallin (2i) représente au plus 40 % du poids de l'ensemble polyamide semi-aromatique (i) + polyamide semi-cristallin (2i).

A propos de la structure du polyamide semi-aromatique amorphe (i), les unités de formule (I) sont issues de méthyl-2 pentaméthylène-diamine-1,5. Quand aux unités éventuelles de formule (II), elles dérivent d'éthyl-2 tétraméthylènediamine-1,4. On peut effectuer la synthèse de la méthyl-2 pentaméthylènediamine utilisée par hydrogénation du dinitrile de l'acide méthyl-2 glutarique selon des procédés connus. De même, la synthèse de l'éthyl-2 tétraméthylènediamine peut être effectuée par hydrogrénation du dinitrile de l'acide éthyl-2 succinique. S'agissant des unités de formule (III) et éventuellement (IV), elles proviennent respectivement d'acide isophtalique et éventuellement d'acide téréphtalique ou d'un dérivé de ces acides comme par exemple un dihalogénure ou un diester.

Selon une modalité préférentielle, on met en oeuvre dans la présente invention un polyamide semi-aromatique amorphe (i) qui présente :

- d'une part une structure correspondant à celle définie ci-avant dans laquelle :

. la quantité des unités (II) dans le mélange (I) + (II) se situe dans l'intervalle allant de 0 % à 5 % en mole et celle des unités (I), par rapport à la même référence, se situe dans l'intervalle allant de 100 % à 95 % en mole,

. la quantité des unités (IV) dans le mélange (III) + (IV) se situe dans l'intervalle allant de 0 % à 85 % en mole et celle des unités (III), par rapport à la même référence, se situe dans l'intervalle allant de 100 % à 15 % en mole,

- et d'autre part des caractéristiques de viscosités, exprimées sous forme de l'indice de viscosité (IV) mesure selon la norme ISO R 307 (2e édition de 1984) dans le métacrésol à 25 °C sur une solution contenant 0,5 g de polymère (séché pendant 2 heures à 60 °C sous balayage d'argon) dans 100 $cm^3$ de métacrésol, qui sont au moins égales à 90 ml/g.

Selon une modalité encore plus préférentielle, on met en oeuvre un polyamide semi-aromatique amorphe (i), qui présente :

- d'une part, une structure correspondant à celle préférée qui est juste indiquée ci-avant dans laquelle la quantité des unités (IV) dans le mélange (III) + (IV) se situe dans l'intervalle allant de 60 % à 85 % en mole et celle des unités (III), par rapport à la même référence, se situe dans l'intervalle allant de 40 % à 15 % en mole,

- et d'autre part des valeurs d'IV comprises entre 100 ml/g et 150 ml/g.

Les polyamides semi-aromatiques amorphes (i) sont des produits connus de l'art antérieur (cf. en particulier FR-A-2.325.673) qui peuvent être préparés par des procédés de polycondensation bien connus des experts dans le domaine des polymères : polycondensation en masse fondue à partir de diamine(s) et de diacide(s) ou de diester(s) de diacide(s), polycondensation en solution ou polycondensation interfaciale à partir de diamine(s) et de dihalogènure(s) de diacide(s).

Pour la réalisation de cette polycondensation, on préfère opérer en masse fonde en mettant en oeuvre le procédé original ayant fait l'objet de la demande française n° 89/02467 au nom de la Demanderesse, déposée le 21 février 1989. Conformément à ce procédé, on polycondense une composition de départ comprenant soit un réactif aminé (méthyl-2 pentaméthylènediamine prise seule ou en mélange avec au plus 15 % en mole d'éthyl-2 tétraméthylènediamine) et un réactif acide (acide isophtalique pris seul ou en mélange avec au plus 90 % en mole d'acide téréphtalique), soit leur(s) sel(s), en opérant dans un système clos de type autoclave et en enchaînant les étapes suivantes :

- étape 1 : dans laquelle, l'autoclave étant fermé, on augmente progressivement la température de la composition de départ jusqu'à une certaine valeur T1 supérieure à 110 °C ; puis, sous une pression constante P égale à la pression autogène de vapeur d'eau obtenue qui est supérieure à la pression atmosphérique, on élimine par distillation régulière l'eau présente dans la masse réactionnelle en élevant progressivement dans le même temps la température de la masse à une valeur T2 supérieure à la température T1 atteinte avant distillation ;

- étape 2 : dans laquelle on abaisse progressivement la pression de la valeur de la pression autogène jusqu'à la valeur de la pression atmosphérique et éventuellement on éleve dans le même temps la température de la masse à une valeur T3 supérieure d'une dizzine à plusieurs dizaines de degrés celsius à la température T2 atteinte avant décompression, en continuant à assurer pendant la durée de cette décompression une distillation régulière d'eau ;

- étape 3 : dans laquelle on achève la polycondensation en agitant la masse réactionnelle un certain temps, en opérant sous la pression atmosphérique et éventuellement (ou) sous une pression inférieure avec une température de masse égale ou supérieure à la température T2 ou T3 obtenue en fin d'étape 2, pendant une durée suffisante permettant d'obtenir un polyamide ayant les caractéristiques moléculaires et de viscosité souhaitées ; ledit procédé étant caractérisé par les points suivants :

. les compositions de départ d'une part contiennent en outre de manière obligatoire de l'eau en quantité suffisante pour permettre de conduire la distillation de l'étape 1 dans les conditions particulières de températures (T1 et T2) et de pression (P) indiquées dans le point qui suit, et d'autre part contiennent en outre mais de manière facultative un catalyseur ;

. dans l'étape 1, après avoir fermé l'autoclave, on augmente progressivement la température de la composition de départ jusqu'à une valeur T1 se situant dans l'intervalle allant de 160° C à 190° C ; puis, sous une pression constante P égale à la pression autogène de vapeur d'eau obtenue qui se situe dans l'intervalle allant de 0,5 à 1,2 MPa, on élimine par distillation régulière l'eau présente dans la masse réactionnelle en élevant progressivement dans le même temps la température de la masse à une valeur T2 se situant dans l'intervalle allant de 210° C à 235° C.

Le procédé qui vient d'être décrit peut être appliqué à des compositions comprenant soit des quantités stoechiométriques d'un réactif acide et d'un réactif aminé apportant des nombres de groupements COOH et $NH_2$ équivalents, soit leur(s) sel(s) stoechiométrique(s).

Par l'expression "eau présente dans la masse réactionnelle" qui apparaît ci-avant dans l'étape 1 à propos de la distillation, on entend définir l'eau contenue dans les compositions de départ plus l'eau qui se forme éventuellement par réaction de polycondensation du réactif acide et du réactif aminé. La quantité d'eau contenue dans les compositions de départ n'est pas critique dès l'instant où elle permet de conduire la distillation de l'étape 1 dans les conditions particulières de températures (T1 et T2) et de pression autogène (P) indiquées ci-avant ; cette quantité d'eau peut être déterminée aisément par l'homme de métier à l'aide de ses connaissances ordinaires et d'essais simples.

Pour la réalisation de l'étape 1 du procédé de polycondensation qui vient d'être décrit, on peut engager des compositions de départ qui se présentent sous forme de mélanges : soit à base du réactif acide, du réactif aminé, d'eau et éventuellement de catalyseur, le réactif acide étant utilisé à l'état solide et le réactif aminé étant utilisé par exemple dans l'état où il se trouve naturellement ou sous forme de solution aqueuse ; soit à base du (ou des) sel(s) de diacide(s) et de diamine(s), d'eau et éventuellement de catalyseur, le (ou les) sel(s) étant utilisés par exemple à l'état solide, en dispersion aqueuse ou sous forme de solution aqueuse.

S'agissant du catalyseur qui peut être utilisé, il consiste généralement soit en un composé (α), soit en un composé (β), (α) désignant un mono- ou polyacide oxygéné minéral ou un mono- ou polyacide oxygéné organique autre qu'un acide carboxylique, dont l'une au moins des fonctions acides possède une constante d'ionisation pka dans l'eau à 25° C égale ou inférieure à 4, (β) désignant un sel alcalin ou alcalino-terreux de cet acide.

A propos de la conduite de l'étape 1 du procédé de polycondensation dont on parle, il convient de faire noter que le chauffage progressif de la composition de départ jusqu'à la température T1 peut se faire sur une durée allant par exemple de 10 minutes à 2 heures. Quant à la distallation sous pression autogène constante P, elle s'effectue sur une période de temps allant par exemple de 30 minutes à 3 heures 30 minutes.

Dans la conduite de l'étape 1, on préfèrera opérer la distillation sous une pression autogène constante P se situant dans l'intervalle allant de 0,6 à 1 MPa en choisissant : une température T1 de début de distillation se situant dans l'intervalle allant de 170° C à 185° C et une température T2 juste avant décompression se situant dans l'intervalle allant de 215° C à 230° C.

Dans la conduite de l'étape 2, la décompression, qui peut progresser par paliers successifs, s'effectue sur une période allant par exemple de 20 minutes à 2 heures 30 minutes et on élève dans le même temps la température de la masse réactionnelle à une valeur T3 se situant par exemple dans l'intervalle allant de 250° C à 320° C.

Dans la conduite de l'étape 3, on termine la polycondensation en laissant réagir la masse réactionnelle à la température T3 ou à une température pouvant être supérieure, de quelques degrés à une dizaine de degrés, à T3 en opérant de préférence sous une pression réduite se situant dans l'intervalle allant de $1.10^2$ à $1000.10^2$ Pa pendant une période de temps (comprenant la durée de mise sous pression réduite) allant par exemple de 10 minutes à 3 heures.

On ne sortirait pas du cadre de la présente invention en mettant en oeuvre un polyamide semi-aromatique amorphe (i) qui contient en outre dans sa structure, à côté des unités de formules (I), (II), (III) et (IV), des unités de récurrence, génératrices de fonctions amide, ayant une structure autre que celles des

unités (I), (II), (III) et (IV) et choisie de manière à accroître la Tg du polyamide semi-aromatique.

En ce qui concerne le polyamide semi-cristallin de type nylon, on met en oeuvre de préférence dans la présente invention un polymère, un mélange de polymères ou un copolymère présentant des caractéristiques de viscosité, exprimées sous forme de l'indice de viscosité (IV) mesuré selon la norme ISO R 307 (2e édition de 1984) sur la partie soluble dans l'acide formique à 90 % en poids de pureté, qui sont au moins égales à 120 ml/g.

Selon une modalité encore plus préférentielle, on met en oeuvre un polyamide semi-cristallin de type nylon consistant dans un nylon 6,6 (polymère d'hexaméthylènediamine et d'acide adipique) présentant des valeurs d'IV comprise entre 130 ml/g et 180 ml/g.

En ce qui concerne la quantité (3i) du polyamide semi-cristallin (2i) dans l'ensemble des polyamides (i) et (2i), elle est au plus égale à 40 % en poids. Au-dessus de la borne maximale de 40 %, les mélanges obtenus ne font plus partie de la présente invention car ils perdent leur caractère de mélange monophasique et amorphe : ils présentent alors une température de fusion. La quantité minimale de polyamide semi-cristallin (2i) correspond à la borne inférieure au-dessous de laquelle les mélanges obtenus sont difficilement transformés par voie fondue à une température de mise en oeuvre pas trop élevée du type de celles allant de 270° C à 290° C ; habituellement, cette quantité minimale représente environ 10 % du poids de l'ensemble polyamide semi-aromatique (i) + polyamide semi-cristallin (2i). La quantité (3i) du polyamide semi-cristallin (2i) peut donc se situer entre 10 % et 40 %. De préférence, cette quantité se situe entre 20 % et 35 % car c'est avec cet intervalle de quantités que les mélanges selon l'invention présentent le double avantage d'une part d'être aisément transformés par voie fondue à une température de mise en oeuvre pas trop élevée allant de 270° C à 290° C et d'autre part de donner un matériau amorphe, monophasique, offrant des propriétés de résilience qui, à la fois, sont supérieures à celles obtenues avec le polyamide semi-aromatique utilisé seul pour des températures d'analyse allant par exemple de la température ambiante à -25° C et restent de plus sensiblement constantes dans tout cet intervalle de températures.

Pour en revenir au comportement particulier en matière de résilicence que peuvent présenter les mélanges de la Demanderesse, on a constaté, et il s'agit là d'un indice en faveur de l'activité inventive liée à la mise en oeuvre de la présente invention, que ce comportement semble spécifique à l'emploi d'un polyamide semi-aromatique du type de ceux visés dans la présente invention puisque en remplaçant (toutes les autres conditions opératoires restant égales par ailleurs) ledit polyamide par un polyamide semi-aromatique amorphe d'un autre type, par exemple le copolymère obtenu à partir d'hexaméthylènediamine et des acides isophtalique (70 % en mole dans le mélange des diacides) et téréphtalique, on ne retrouve pas le comportement particulier en question. Un autre indice d'activité inventive peut être trouvé dans le fait que des mélanges comprenant un polyamide semi-aromatique amorphe ayant une aptitude à la cristallisation, comme par exemple les polyamides semi-aromatiques obtenus à partir d'un mélange d'acides isophtalique et téréphtalique qui présentent une structure dans laquelle la quantité des unités (III) dérivées d'acide isophtalique dans le mélange (III) + (IV) est faible et se situe dans l'intervalle allant de 15 % à 40 % en mole, et un polyamide semi-cristallin de type nylon donnent toujours un matériau amorphe transparent, qui par exemple ne cristallise pas au réchauffage pendant les opérations de transformation, pour des quantités de polyamide semi-cristallin aussi élevées que celles allant de 10 % à 40 %.

Les mélanges selon la présente invention peuvent être préparés de diverses manières connues en soi. Selon une modalité préférentielle, les mélanges sont préparés en deux étapes : une première étape dans laquelle les constituants sont agités ensemble à température ambiante (23° C) dans un mélangeur rapide classique pour poudre ou granulés et une seconde étape dans laquelle ce pré-mélange est homogénéisé par malaxage en phase fondue, à une température se situant dans l'intervalle allant de 270° C à 290° C, en opérant dans un dispositif permettant le mélange des matières plastiques à l'état fondu, de préférence une extrudeuse à une ou plusieurs vis. A l'issue de ce traitement, les mélanges de l'invention se présentent en général sous la forme de joncs qui sont ensuite découpés en granulés ; ces granulés seront utilisés ultérieurement pour la transformation des mélanges de l'invention à l'aide de machines conventionnelles par exemple d'injection ou d'extrusion pour donner des objets conformés tels que notamment des articles pleins ou des corps creux. S'agissant des conditions de la transformation, les mélanges selon l'invention peuvent par exemple être injectés aisément en utilisant une température matière pas trop élevée du type de celles allant de 270° C à 290° C.

On peut ajouter dans les mélanges de l'invention, à un moment quelconque de leur préparation, les additifs habituels qui doivent d'une part être avantageusement solubles dans le mélange puisque la transparence joue un rôle important et d'autre part ne pas être des germes de cristallisation. Ces additifs sont par exemple des anti-oxydants, des stabilisants à la lumière, des stabilisants thermiques, des plastifiants, des azurants optiques, des colorants, etc.

L'exemple qui suit illustre de manière non limitative comment la présente invention peut être mise en

pratique.

EXEMPLE

Dans cet exemple, on illustre un mélange conforme à la présente invention contenant : (i) 75 % en poids d'un polyamide semi-aromatique amorphe obtenu comme indiqué ci-après à partir de méthyl-2 pentaméthylènediamine-1,5, d'acide isophtalique (20 % en mole dans le mélange des diacides) et d'acide téréphtalique (80 % en mole dans le mélange des diacides), présentant un indice de viscosité de 127 ml/g (déterminé comme indiqué ci-avant dans la description sur une solution du polymère dans le métacrésol) et (2i) 25 % en poids de nylon 6,6 qui est le produit commercialisé par la Société RHONE-POULENC CHIMIE sous la marque déposée TECHNYL 50 AP, présentant un indice de viscosité de 140 ml/g (déterminé comme indiqué ci-avant sur la partie soluble dans l'acide formique).

1) Préparation du polyamide semi-aromatique amorphe :

1.1) Préparation du sels acides (isophtalique + téréphtalique)/méthylpentaméthylènediamine en solution aqueuse :

On opère dans un réacteur 100 litres équipé :
- d'un système de chauffage,
- d'un agitateur de type hélice marine,
- d'un système permettant un balayage d'azote et le maintien d'une atmosphère exempte d'oxygène, et
- d'un système permettant de condenser les produits volatils.

On introduit à froid dans le réacteur maintenu sous léger balayage d'azote :
- 5128,5 g d'acide isophtalique (30,8944 moles),
- 20513,9 g d'acide téréphtalique (123,5776 moles),
- 18635,5 g de méthyl-2 pentaméthylènediamine-1,5 (160,6509 moles),
- 29518,6 g d'eau distillée.

On élève la température de la masse à 60 °C et on agite le mélange pendant 2 heures en maintenant le balayage d'azote. On obtient ainsi une solution aqueuse à 60 % en poids de sel stoechiométrique. Le pH atteint alors la valeur de 9,2 ; dans cette préparation, on met en oeuvre un excès molaire de réactif aminé de 4 %.

2.1) Polycondensation en autoclave :

L'appareillage utilisé est constitué par un autoclave de 100 litres en acier inoxydable agité et équipé pour travailler jusqu'à 300 °C et 2,2 MPa de pression. Il est muni :
- d'un système de chauffage à double enveloppe par fluide caloporteur,
- d'un agitateur de type cadre,
- d'un système permettant la mise sous pression d'azote,
- d'un circuit permettant de condenser et de recueillir les produits volatils,
- et d'un dispositif de mise sous une pression inférieure à la pression atmosphérique.

On introduit dans l'autoclave la solution aqueuse de sel préparée ci-avant. Après 3 purges à l'azote par mise sous pression de $4.10^5$ Pa puis décompression, on effectue en 30 minutes la concentration de la solution aqueuse de sel de 60 % en poids à 70 % en poids, par évaporation à la pression atmosphérique d'une partie de l'eau présente dans le milieu ; la température atteint alors 110,5 °C.

Après on effectue successivement les étapes suivantes :

. Etape 1 :

On élève la température de la solution aqueuse à 70 % en poids de sel à T1 = 179 °C en 50 minutes en maintenant la pression autogène. On atteint alors 0,7 MPa de pression (P). On distille ensuite sous pression constante de 0,7 ± 0,02 MPa en 1 heure 55 minutes l'eau présente dans la masse réactionnelle de

manière à atteindre une température de masse égale à T2 = 216° C ;

. Etape 2 :

On décomprime jusqu'à pression atmosphérique en 1 heure 45 minutes et on élève dans le même temps la température de la masse à la valeur T3 = 261° C tout en continuant à assurer une distillation régulière d'eau ;

- Etape 3 :

On élève ensuite la température de la masse à 280° C, et on termine la polycondensation en continuant à agiter la masse à 280° C sous pression atmosphérique pendant 30 minutes.

L'agitation est arrêtée, puis on établit dans l'autoclave une pression d'azote et on soutire le polymère. Ce dernier extrudé de l'autoclave sous forme de jonc est refroidi par passage dans un bain d'eau froide, puis il est granulé et séché.

Le polymère obtenu est transparent et homogène. Il présente un indice de viscosité de 127 ml/g.

2) Préparation du mélange conforme à l'invention :

En opérant dans un mélangeur de type "Roule Fût" de la Société ENGELSMANN tournant à 20-30 tours/minute, on met en contact direct pendant 10 minutes à 23° C les constituants suivants :

(i) 75 parties en poids de granulés de polyamide semi-aromatique amorphe ayant été préparés comme indiqué ou paragraphe 1), et

(2i) 25 parties en poids de granulés de nylon 6,6.

Le pré-mélange obtenu est ensuite malaxé et homogénéisé à l'état fondu dans extrudeuse à double vis corotatives de marque LEISTRITZ, comportant des vis de diamètre D égal à 34 mm et de longueur égale à 35 D et comprenant une zone d'alimentation, une zone de mélange chauffée et une filière de 4 mm de diamètre. Les paramètres de marche de l'extrudeuse sont les suivants :

- température de la zone de mélange : 280° C,
- température de la filière : 280° C,
- vitesse de rotation des vis : 200 tours/minute,
- débit matière : 10 kg/heure,
- temps de séjour : environ 2 minutes.

A la sortie de l'extrudeuse, on obtient un jonc qui est refroidi et découpé en granulés d'environ 5 mm de longueur et de 4 mm de diamètre.

Le mélange de polyamides selon l'invention, ainsi obtenu sous forme de granulés, est amorphe : il présente une Tg de 106° C mais pas de température de fusion, et il est transparent ; la morphologie du mélange et sa Tg sont établies par analyse calorimétrique différentielle (DSC) à l'aide d'un appareil METTLER du type DSC 30 (mesure en seconde chauffe avec montée en température de 20° C/minute). La viscosité à l'état fondu du mélange, déterminée à l'aide d'un rhéomètre capillaire de marque déposée INSTRON 3211, équipé d'une filière ayant un rapport longueur/diamètre égal à 60, est de 324 Pa.s à 300° C et sous un gradient de cisaillement de 240 $s^{-1}$.

Dans le but de lester les propriétés de résilience des articles obtenus à partir des granulés de mélange selon l'invention qui ont été obtenus, on procède à des essais de choc CHARPY : les résiliences sont mesurées (en $kJ/m^2$) à différentes températures sur des éprouvettes entaillées de type barreau selon les indications de la norme NF T 51035 en opérant avec des éprouvettes conditionnées à EHO (0 % d'humidité relative). Les éprouvettes utilisées ont été préparées par moulage par injection à l'aide d'une machine vis-piston de marque BATTENFELD BSKM 100/70 DS 2000 dans les conditions de transformation suivantes :

- température matière (température de la zone la plus froide -et de la zone la plus chaude) : 280 - 310° C,
- température du moule : 80° C,
- pression matière d'injection : 6 MPa,
- pression de maintien : 3 MPa.

Les éprouvettes moulées par injection présentent un état de transparence parfait et les résultats des essais de choc CHARPY sont rassemblés dans le tableau suivant. A noter que l'on obtient des éprouvettes moulées ayant la même transparence et donnant les mêmes valeurs de résistance au choc lorsque, pour

réaliser la transformation du mélange selon l'invention à l'aide de la machine vis-piston BATTENFELD, la température matière est abaissée pour se situer dans l'intervalle : 270-290 °C.

A titre comparatif (essai A), on a reproduit les mêmes opérations (passage en extrudeuse double vis, puis moulage des éprouvettes) que celles décrites ci-avant, mais en opérant cette fois avec le seul polyamide semi-aromatique amorphe.

En sortie d'extrudeuse, le polymère obtenu présente une Tg de 142 °C et sa viscosité à l'état fondu est de 391 Pa.s. Les résultats des essais de choc CHARPY sont rassemblés dans le tableau suivant.

A titre comparatif encore (essai B), on a reproduit les mêmes opérations que celles décrites dans l'exemple, mais en partant cette fois des constituants suivants : (i) 50 parties en poids de polyamide semi-aromatique et (2i) 50 parties en poids de nylon 6,6.

En sortie d'extrudeuse, le mélange obtenu n'est plus amorphe : il présente une Tg de 82 °C et une température de fusion de 248 °C. Les résultats des essais de choc sont rassemblés dans le tableau suivant.

A titre comparatif encore (essai C), on a reproduit les mêmes opérations que celles décrites dans l'exemple, mais en remplaçant le polyamide semi-aromatique mis en oeuvre dans cet exemple par la même quantité (75 % en poids) d'un polyamide semi-aromatique amorphe obtenu, selon un procédé classique type nylon 6,6 de polycondensation en masse fondue, à partir d'hexaméthylènediamine, d'acide isophtalique (70 % en mole dans le mélange des diacides) et d'acide téréphtalique (30 % en mole dans le mélange des diacides), présentant un indice de viscosité de 112 ml/g (déterminé comme indiqué dan la description sur une solution du polymère dans le métacrésol).

A titre comparatif encore (essai D), on a reproduit l'essai C précédent mais en mettant en oeuvre cette fois le seul polyamide semi-aromatique amorphe. Les résultats des mesures de résistance au choc des essais C et D sont rassemblés dans le tableau suivant.

TABLEAU

| EXEMPLE/ESSAI | RESILIENCE CHARPY (*) en kJ/m2 | | | | |
|---|---|---|---|---|---|
| | 23 °C | 10 °C | 0 °C | -10 °C | -25 °C |
| 1 | 11,1 | 10,9 | 11,1 | 10,9 | 10,9 |
| A | 9,8 | 9,6 | 8,9 | 8,6 | 7,4 |
| B | 5,9 | 5,4 | 6,4 | 8,3 | 6,8 |
| C | 6,4 | 7,6 | a | a | 7,1 |
| D | 12,4 | 12,2 | a | a | 10,9 |

(*) Chaque valeur indiquée est la moyenne de 10 mesures qui on été effectuées.
a Valeur non mesurée.

## Revendications

1/ Mélanges monophasiques et amorphes comprenant un polyamide semi-aromatique amorphe et un polyamide semi-cristallin de type nylon dans lesquels la quantité du polyamide semi-cristallin de type nylon dans le mélange des deux types de polyamide est minoritaire, lesdits mélanges étant caractérisés en ce que :

(i) le polyamide semi-aromatique amorphe de départ, qui peut être un homo-ou un copolymère, présente les particularités suivantes :

. il comprend dans sa structure des unités de récurrence de formules (I), (II), (III) et (IV) :

(I) désignant la structure : 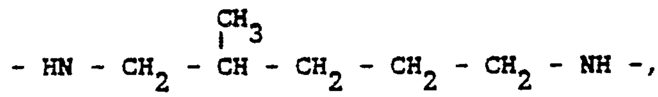

(II) désignant la structure : 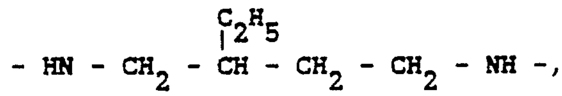

(III) désignant la structure : 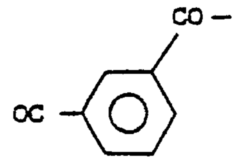

(IV) désignant la structure : 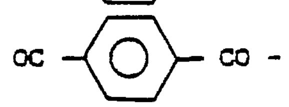 ,

les unités de formules (II) et (IV) étant facultatives ;

. le rapport molaire des unités (I) + éventuellement (II) par rapport à la somme des unités (III) + éventuellement (IV) est égal à 1 ;

. la quantité des unités (II) dans le mélange (I) + (II) se situe dans l'intervalle allant de 0 % à 15 % en mole et celle des unités (I), par rapport à la même référence, se situe dans l'intervalle allant de 100 % à 85 % en mole ;

. la quantité des unités (IV) dans le mélange (III) + (IV) se situe dans l'intervalle allant de 0 % à 90 % en mole et celle des unités (III), par rapport à la même référence, se situe dans l'intervalle allant de 100 % à 10 % en mole ;

(2i) le polyamide semi-cristallin de type nylon, qui peut être un homo- ou un copolymère, est pris dans le groupe formé par : le nylon 6,6 (polymère d'hexaméthylènediamine et d'acide adipique), le nylon 6 (polymère d'ε-caprolactame), les mélanges de ces polymères et les copolymères obtenus à partir des monomères cités ci-avant servant à la préparation des nylon 6,6 et 6 ; et

(3i) la quantité du polyamide semi-cristallin (2i) représente au plus 40 % du poids de l'ensemble polyamide semi-aromatique (i) + polyamide semi-cristallin (2i).

2/ Mélanges selon la revendication 1, caractérisés en ce que le polyamide semi-aromatique amorphe (i) présente :

- d'une part une structure correspondant à celle définie ci-avant dans laquelle :

. la quantité des unités (II) dans le mélange (I) + (II) se situe dans l'intervalle allant de 0 % à 5 % en mole et celle des unités (I), par rapport à la même référence, se situe dans l'intervalle allant de 100 % à 95 % en mole,

. la quantité des unités (IV) dans le mélange (III) + (IV) se situe dans l'intervalle allant de 0 % à 85 % en mole et celle des unités (III), par rapport à la même référence, se situe dans l'intervalle allant de 100 % à 15 % en mole,

- et d'autre part des caractéristiques de viscosités, exprimées sous forme de l'indice de viscosité (IV) mesure selon la norme ISO R 307 (2e édition de 1984) dans le métacrésol à 25 °C sur une solution contenant 0,5 g de polymère (séché pendant 2 heures à 60 °C sous balayage d'argon) dans 100 $cm^3$ de métacrésol, qui sont au moins égales à 90 ml/g.

3/ Mélanges selon la revendication 2, caractérisés en ce que le polyamide semi-aromatique amorphe (i) présente :

- d'une part, une structure correspondant à celle préférée qui est juste indiquée ci-avant dans laquelle la quantité des unités (IV) dans le mélange (III) + (IV) se situe dans l'intervalle allant de 60 % à 85 % en mole et celle des unités (III), par rapport à la même référence, se situe dans l'intervalle allant de 40 % à 15 % en mole,

- et d'autre part des valeurs d'IV comprises entre 100 ml/g et 150 ml/g.

4/ Mélanges selon l'une quelconque des revendications 1 à 3, caractérisés en ce que le polyamide semi-cristallin de type nylon présente des caractéristiques de viscosité, exprimées sous forme de l'indice de viscosité (IV) mesuré selon la norme ISO R 307 (2e édition de 1984) sur la partie soluble dans l'acide formique à 90 % en poids de pureté, qui sont au moins égales à 120 ml/g.

5/ Mélanges selon la revendication 4, caractérisés en ce que le polyamide semi-cristallin de type nylon consiste dans un nylon 6,6 (polymère d'hexaméthylènediamine et d'acide adipique) présentant des valeurs

d'IV comprises entre 130 ml/g et 180 ml/g.

6/ Mélanges selon l'une quelconque des revendications 1 à 5, caractérisés en ce que la quantité (3i) du polyamide semi-cristallin (2i) représente 10 à 40 % du poids de l'ensemble polyamide semi-aromatique (i) + polyamide semi-cristallin (2i).

7/ Mélanges selon la revendication 6, caractérisés en ce que la quantité (3i) du polyamide semi-cristallin (2i) se situe entre 20 % et 35 % en poids.

8/ Procédé de préparation des mélanges selon l'une quelconque des revendications 1 à 7, caractérisés en ce qu'il est réalisé par mise en oeuvre des deux étapes suivantes : une première étape dans laquelle les constituants sont agités ensemble à température ambiante (23 °C) dans un mélangeur rapide classique pour poudre ou granulés et une seconde étape dans laquelle ce pré-mélange est homogénéisé par malaxage en phase fondue, à une température se situant dans l'intervalle allant de 270 °C à 290 °C, en opérant dans un dispositif permettant le mélange des matières plastiques à l'état fondu.

9/ Objets conformés obtenus à partir des mélanges selon l'une quelconque des revendications 1 à 6.

Office européen des brevets

# RAPPORT DE RECHERCHE EUROPEENNE

Numero de la demande

EP 90 42 0324

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 070 001 (E.I. DU PONT DE NEMOURS)<br>* revendications *<br>--- | 1-9 | C 08 L 77/00 |
| A | AT-A- 295 145 (DYNAMIT NOBEL)<br>* revendications *<br>--- | 1-9 | |
| A | DE-A-1 769 040 (DYNAMIT NOBEL)<br>* revendications *<br>--- | 1-9 | |
| A | EP-A-0 279 342 (BAYER)<br>* revendications *<br>--- | 1-9 | |
| D,A | FR-A-2 325 673 (DYNAMIT NOBEL)<br>* revendications *<br>----- | 1 | |

DOMAINES TECHNIQUES RECHERCHES (Int. Cl.5)

C 08 L
C 08 G

Le présent rapport a été établi pour toutes les revendications

| Lieu de la recherche | Date d'achèvement de la recherche | Examinateur |
|---|---|---|
| BERLIN | 11-10-1990 | BOEKER R.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant